(19) Europäisches Patentamt
European Patent Office
Office européen des brevets

(11) **EP 4 668 377 A1**

(12) **EUROPEAN PATENT APPLICATION**
published in accordance with Art. 153(4) EPC

(43) Date of publication:
**24.12.2025 Bulletin 2025/52**

(21) Application number: **24803783.0**

(22) Date of filing: **10.05.2024**

(51) International Patent Classification (IPC):
**H01M 8/04119** (2016.01)   **H01M 8/04082** (2016.01)

(52) Cooperative Patent Classification (CPC):
Y02E 60/50

(86) International application number:
**PCT/KR2024/006405**

(87) International publication number:
**WO 2024/232730 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.05.2023 KR 20230061333**

(71) Applicant: **Kolon Industries, Inc.**
**Seoul 07793 (KR)**

(72) Inventors:
• **OH, Young Seok**
**Seoul 07793 (KR)**
• **LEE, Ah Reum**
**Seoul 07793 (KR)**
• **LEE, Ji Yoon**
**Seoul 07793 (KR)**
• **LEE, Bong Seok**
**Seoul 07793 (KR)**
• **AHN, Woong Jeon**
**Seoul 07793 (KR)**

(74) Representative: **Vossius & Partner**
**Patentanwälte Rechtsanwälte mbB**
**Siebertstrasse 3**
**81675 München (DE)**

(54) **FUEL CELL SYSTEM**

(57)     The present disclosure provides a fuel cell system, including: a fuel cell stack; a hydrogen supply unit for supplying hydrogen to the stack; an air supply unit for supplying air to the stack, wherein the air supply unit includes an air compression unit and a humidifier; and a filter unit disposed between the air supply unit and the fuel cell stack and configured to remove peroxide and/or hydroxyl radicals.

**FIG. 1**

**EP 4 668 377 A1**

**Description**

Technical Field

The present disclosure relates to a novel fuel cell system.

Background Art

A fuel cell is a power-generating cell that converts the chemical energy of hydrogen and oxygen into electrical energy through an electrochemical reaction. Unlike ordinary chemical batteries such as dry cells or rechargeable batteries, a fuel cell may continuously produce electricity as long as hydrogen and oxygen are supplied, and has an advantage of being more than twice as efficient as an internal combustion engine since it does not have heat loss.

Additionally, because water is generated as a product when hydrogen and oxygen are used as raw materials, a fuel cell is an environmentally friendly energy generation device that does not produce pollutants. Therefore, a fuel cell is not only environmentally friendly but also has the advantage of reducing concerns about resource depletion due to increased energy consumption.

Fuel cells may be classified into polymer electrolyte membrane fuel cells (PEMFC), phosphoric acid fuel cells (PAFC), molten carbonate fuel cells (MCFC), solid oxide fuel cells (SOFC), and alkaline fuel cells (AFC).

Among these, polymer electrolyte membrane fuel cells are known to be suitable for use in transportation systems, since they may operate at lower temperatures as compared to other fuel cells and have a high power density.

Meanwhile, polymer electrolyte fuel cells generally produce water through the reaction of two moles of hydrogen and one mole of oxygen in the fuel cell stack during operation, however, in the case of incomplete reactions, by-products such as peroxides or hydroxyl radicals may be generated.

When these generated peroxides or hydroxyl radicals flow from the fuel cell stack into a humidifier, they may cause oxidation of the organic hollow fiber membranes disposed in the humidifier, leading to decomposition and deterioration of the hollow fiber membranes.

The decomposition and deterioration of the hollow fiber membranes hinder the delivery of sufficiently humidified air to the fuel cell stack, thereby reducing the efficiency of the fuel cell stack and the entire fuel cell system.

Accordingly, there is still industrial demand for technology that prevents the transfer of peroxides and hydroxyl radicals generated from a fuel cell stack into a humidifier.

Disclosure

Technical Problem

In order to solve the above-mentioned problems, a novel fuel cell system is provided that prevents peroxides and hydroxyl radicals generated from the fuel cell stack from flowing into the membrane humidifier.

Technical Solution

According to an aspect, a fuel cell system is provided including,

a fuel cell stack,
a hydrogen supply unit for supplying hydrogen to the stack,
an air supply unit for supplying air to the stack, the air supply unit including an air compressor and a humidifier, and
a filter unit disposed between the air supply unit and the fuel cell stack, configured to remove peroxides and/or radicals.

According to another aspect, the fuel cell system is provided including, a fuel cell stack,

a hydrogen supply unit for supplying hydrogen to the stack,
an air supply unit for supplying air to the stack, the air supply unit including an air compressor and a humidifier, and
a filter unit disposed inside the humidifier, configured to remove peroxide and/or radicals.

According to another aspect, a fuel cell system is provided including,

a fuel cell stack,
a hydrogen supply unit for supplying hydrogen to the stack,
an air supply unit for supplying air to the stack, the air supply unit including an air compressor and a humidifier, and

a first filter unit disposed between the air supply unit and the fuel cell stack, configured to remove peroxides and/or hydroxyl radicals, and
a second filter unit disposed inside the humidifier, configured to remove peroxides and/or hydroxyl radicals.

Advantageous Effects

The fuel cell system according to an aspect includes the filter unit disposed between the air supply unit and the fuel cell stack, or disposed inside the humidifier, and is configured to remove peroxides and/or hydroxyl radicals. This prevents the entry of peroxides and/or hydroxyl radicals from the fuel cell stack into the humidifier, thereby preventing the decomposition and deterioration of the hollow fiber membrane in the humidifier.

Description of Drawings

FIG. 1 is a block diagram illustrating the configuration of a fuel cell system according to an embodiment.
FIG. 2 is a block diagram illustrating the configuration of a fuel cell system according to an embodiment.
FIGS. 3 and 4 are exploded perspective views of a humidifier according to an embodiment.

Mode for Invention

The present inventive concept described below may be subject to various modifications and may have various embodiments. Specific embodiments are illustrated in the drawings and are described in detail in the detailed description. However, this is not intended to limit the present inventive concept to particular embodiments, but it should be understood to include all modifications, equivalents, or alternatives falling within the technical scope of the present inventive concept.

The terminology used below is merely for the purpose of describing particular embodiments and is not intended to limit the present inventive concept. Unless the context clearly indicates otherwise, the singular expressions include the plural. Herein, the terms "comprising," "having," and the like are intended to indicate the presence of the stated features, numerals, processes, operations, components, parts, elements, materials, or combinations thereof, but are not intended to preclude the possibility that one or more other features, numerals, processes, operations, components, parts, elements, materials, or combinations thereof are also present or may be added.

When an element is referred to as being "connected to" or "coupled to" another element, it should be understood that the element may be directly connected or coupled to the other element, or that a further element may be present between them. In contrast, when an element is referred to as being "directly connected to" or "directly coupled to" another element, it should be understood that there are no further elements between them.

Throughout the specification, when a portion such as a layer, film, region, or plate is described as being "on" or "over" another portion, it should be understood that it may be directly on the other portion or that there may be intervening portions therebetween. The terms "first," "second," etc., throughout the specification may be used to describe various elements, but the elements should not be limited by these terms. Throughout the specification, the term "in fluid communication" means that fluids, such as gases or liquids, are connected, coupled, or arranged to allow fluid flow, and the terms are used only for the purpose of distinguishing one component from another component.

The embodiments described below are merely exemplary, and various modifications may be made from these embodiments.

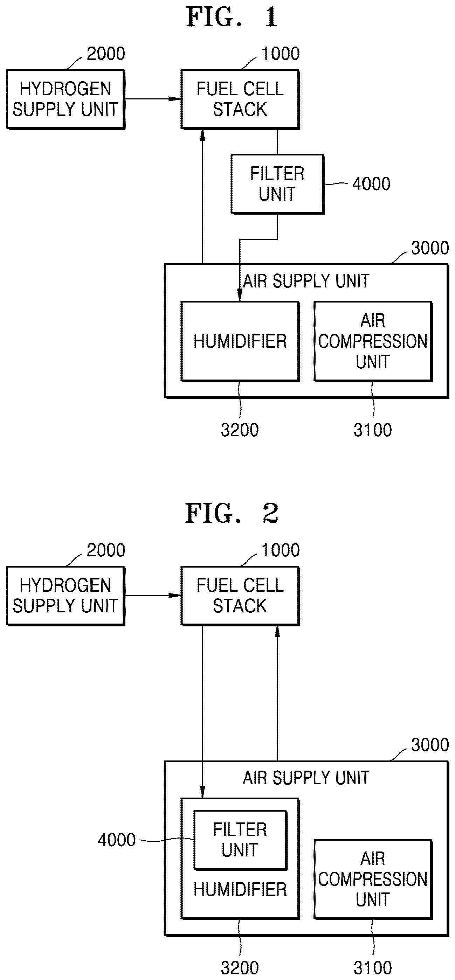

The fuel cell system according to an embodiment will be described below with reference to the block diagrams of FIGS. 1 and 2.

FIGS. 1 and 2 are block diagrams schematically showing the configuration of the fuel cell system according to an embodiment.

Referring to FIG. 1, the fuel cell system according to an embodiment includes a fuel cell stack 1000, a hydrogen supply unit 2000, an air supply unit 3000, and a filter unit 4000.

The fuel cell stack 1000 reacts hydrogen supplied from the hydrogen supply unit 2000 with oxygen supplied from the air supply unit 3000 to generate heat and steam.

The fuel cell stack 1000 includes a membrane-electrode assembly, an electrolyte membrane, a catalyst layer, electrodes of the cathode and anode, a gas diffusion layer, a separator plate, and a gasket, and each component may be produced using known materials by known methods.

According to an embodiment, the membrane-electrode assembly included in the fuel cell stack may include a porous support and an ion conductor layer disposed on the outer surface of the porous support. The porous support suppresses volumetric expansion caused by moisture generated at the electrode during the operation of the fuel cell to achieve dimensional stability and, due to its large porous surface area, may contain a large amount of ion conductor.

The porous support may include a fluorine-based support or a hydrocarbon-based polymer, and may include, for example, nylon, polyimide (PI), polybenzoxazole (PBO), polybenzimidazole (PBI), polyamideimide (PAI), polyethyleneterephtalate, polyethylene (PE), polytetrafluoroethylene (PTFE), polypropylene (PP), or a combination thereof.

The ion conductor may be a polymer with a high ion exchange capacity, and those skilled in the art may easily select and use it from known ion conductors. For example, it may include a fluorine-based polymer such as poly(perfluorosulfonic acid), poly(perfluorocarboxylic acid), a copolymer of fluorovinylether and tetrafluoroethylene containing a sulfonic acid group, defluorinated sulfonated polyether ketone, or a mixture thereof; sulfonated polyimide (S-PI); sulfonated polyarylethersulfone (S-PAES); sulfonated polyetheretherketone (SPEEK); sulfonated polybenzimidazole (SPBI); sulfonated polysulfone (S-PSU); sulfonated polystyrene (S-PS); sulfonated polyphosphazene; sulfonated polyquinoxaline; sulfonated polyketone; sulfonated polyphenylene oxide; sulfonated polyether sulfone; sulfonated polyether ketone; sulfonated polyphenylene sulfone; sulfonated polyphenylene sulfide; sulfonated polyphenylene sulfide sulfone; sulfonated polyphenylene sulfide sulfone nitrile; sulfonated polyarylene ether; sulfonated polyarylene ether nitrile; sulfonated polyarylene ether nitrile; sulfonated polyarylene ether sulfone ketone; or combinations thereof.

According to an embodiment, the electrolyte membrane included in the fuel cell stack may include a fluorine-based resin to ensure mechanical strength. The electrolyte membrane may include a fluorine-based porous resin, and may be obtained, for example, by using polytetrafluoroethylene (PTFE) as a support and impregnating the support with a fluorine-based ion conductor.

According to an embodiment, the fuel cell stack may have a cathode and an anode disposed at each end of the fuel cell stack, where hydrogen and oxygen are generated at the anode through water electrolysis, and the cathode that receives hydrogen generated from the anode produces hydrogen atoms through a reduction reaction. At this time, a catalyst layer may be further included as a raw material to lower the activation energy of the reactions at the cathode and anode. The catalyst may be any material capable of participating in the reaction to lower the reaction activation energy, and may be used without limitation; for example, a porous carbon-based carrier supported with a platinum-based metal or a metal having a catalytic function may be used.

According to an embodiment, a gas diffusion layer may be further included to facilitate the diffusion of air introduced from the humidifier. The gas diffusion layer may enhance the efficiency of the fuel cell by increasing the frequency of contact between the air introduced from the humidifier and the membrane-electrode assembly.

Furthermore, it is understood that various elements constituting the fuel cell may be appropriately selected and applied from known techniques by those skilled in the art.

The fuel cell stack 1000 generates electricity through the combination reaction of hydrogen and oxygen. Specifically, in the fuel cell stack 1000, hydrogen is supplied to the anode side, and oxygen is supplied to the cathode side. At the anode, hydrogen ions are generated by the oxidation reaction of hydrogen, and the electrons thus produced move through a wire to the cathode side. The hydrogen ions move through the electrolyte membrane to the cathode side, where they react with oxygen to form water vapor.

Specifically, since hydrogen peroxide ($H_2O_2$) is formed as an intermediate during the oxygen reduction reaction at the cathode electrode of the fuel cell stack, hydroxyl radicals may be generated from the hydrogen peroxide or from the decomposition of the hydrogen peroxide at the cathode electrode. Such hydrogen peroxide and hydroxyl radicals may be delivered along with the humid air when the air containing water vapor is sent to the humidifier for reuse. As a result, hydrogen peroxide and hydroxyl radicals may penetrate into the humidifier and cause oxidation of the hollow fiber membrane made of organic polymer, thereby newly raising the problem of degradation of the hollow fiber membrane.

Accordingly, the present inventors, in order to prevent the entry of hydrogen peroxide and hydroxyl radicals from the fuel cell stack into the humidifier, have separately manufactured and arranged a filter unit 4000 that may collect and/or remove hydrogen peroxide and/or hydroxyl radicals in the path where water vapor moves from the fuel cell stack to the humidifier or inside the humidifier.

The description of this filter unit will be provided later.

The hydrogen supply unit 2000 supplies the hydrogen stored therein to the fuel cell stack 1000. The hydrogen supply unit may be used without limitation as long as it is capable of supplying hydrogen to the fuel cell stack.

The air supply unit 3000 includes an air compression unit 3100 that compresses outside air to generate a first fluid, and a humidifier 3200 that humidifies the first fluid and delivers it to the fuel cell stack.

The air compression unit 3100 and the humidifier 3200 are arranged to be in fluid communication with each other, and the humidifier 3200 may be disposed downstream of the air compression unit so that the outside air that has passed through the air compression unit 3100 is provided into the humidifier 3200.

The air compression unit 3100 receives outside air and supplies the compressed first fluid into the humidifier. The air compression unit 3100 is a device that compresses a fluid such as air and may include, for example, a blower, a compressor or the like.

If necessary, a filter to block the entry of contaminants may be additionally installed at the inlet of the air compression unit, or a separate air filter may be provided.

The humidifier 3200 receives compressed air from the air compression unit 3100, humidifies it, and supplies it to

EP 4 668 377 A1

the fuel cell stack.

The humidifier 3200 enables moisture exchange between the air from the outside and the steam generated from the fuel cell stack 1000, and supplies the humidified air into the fuel cell stack 1000.

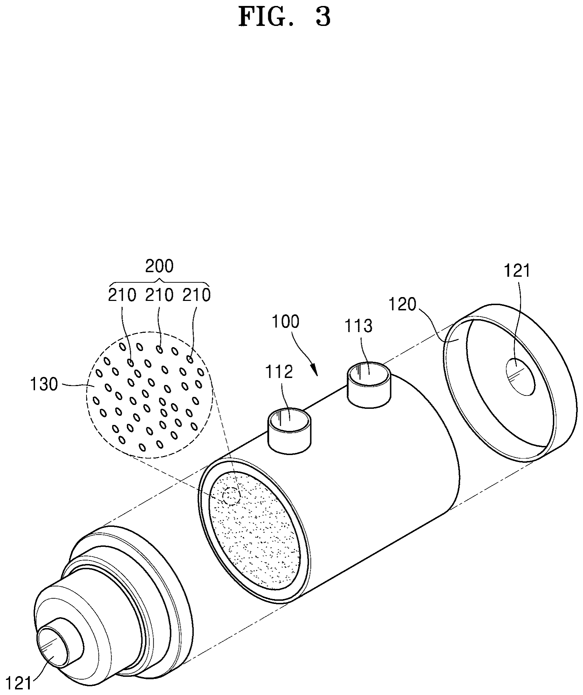

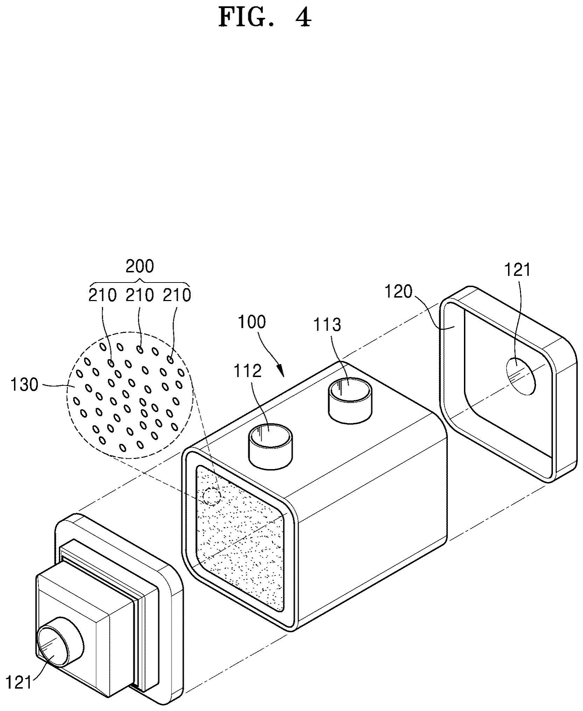

The details of the humidifier 3200 may be understood with reference to FIGS. 3 and 4.

The humidifier 3200 may include a first inlet 121 into which the first fluid flows from the air compression unit 3100, a first outlet 121 for delivering humidified air from the humidifier to the fuel cell stack, and a second inlet 112 into which the second fluid (i.e., high temperature and humid air) flows from the fuel cell stack.

The filter unit 4000 may be disposed between the humidifier 3200 and the fuel cell stack 1000.

According to an embodiment, the filter unit 4000 may be disposed between the fuel cell stack 1000 and the second inlet 112 of the humidifier 3200. For example, it may be disposed adjacent to the second inlet 112 where the second fluid from the fuel cell stack 1000 flows in, or adjacent to the vapor outlet (not shown) of the fuel cell stack 1000.

The filter unit 4000 may include a porous substrate and an antioxidant provided on the surface of the porous substrate.

The porous substrate may be a porous nonwoven fabric. For example, the porous substrate may include a membrane having an average pore size of 50 nm to 1000 $\mu$m on its surface. When the average pore size of the porous substrate satisfies 50 nm to 1000 $\mu$m, moisture may selectively pass through while the oxide substances contained in the moisture come into contact with the antioxidant and may be removed by chemical reaction. For example, the average pore size of the porous substrate may be 500 nm to 900 $\mu$m, 1 $\mu$m to 800 $\mu$m, 10 $\mu$m to 700 $\mu$m, 100 $\mu$m to 600 $\mu$m, or 200 $\mu$m to 500 $\mu$m, and is not limited thereto but may have any numerical range included within the aforementioned ranges.

The porous substrate may selectively include either a hydrophilic membrane or a hydrophobic membrane. For example, and without limitation, the porous substrate may include a membrane including a thermoplastic which includes polyethylene, polypropylene, 1-octene, styrene, polyolefin (co)polymers, polyamide, poly-1-butene, poly-4-methyl-1-pentene, polyether sulfone, ethylene tetrafluoroethylene, polyvinylidene fluoride, polysulfone, polyacrylonitrile, polyamide, cellulose acetate, cellulose nitrate, regenerated cellulose, polyvinyl chloride, polycarbonate, polyethylene terephthalate, polyimide, polytetrafluoroethylene, ethylene chlorotrifluoroethylene, or combinations thereof.

The porous substrate may include any known substrate having a mesh structure.

The antioxidant may be provided on one surface or both surfaces of the porous substrate. For example, the antioxidant may be provided on both surfaces of the porous substrate, and the concentration of the antioxidant provided on the first surface facing the fuel cell stack 1000 may be higher than the concentration of the antioxidant provided on the second surface opposite the first surface.

The antioxidant may include an organic antioxidant, a metallic antioxidant, an organometallic antioxidant, a hindered amine light stabilizer (HALS)-based antioxidant, a sulfur-based antioxidant, a phosphorus-based antioxidant, or combinations thereof.

For example, the organic antioxidant may include coumaric acid, dopamine, hydroquinone, phenolphthalein, phthalic acid, acetylsalicylic acid, a phenol-based antioxidant, niacin, luminol, urea, phytic acid, glyoxal, or any mixture thereof.

For example, the metallic antioxidant may include a salt of a Ce metal such as $Ce(NO_3)_3$, $CeCl_3$, or $Ce_2(SO_4)_3$; a salt of a Mn metal such as $Mn(NO_3)$; a metal oxide such as $CeO_2$, $CeSiO_2$, $MnO_2$, or $TiO_2$ ; or any mixture thereof.

For example, the organometallic complex may include a Ce-crown complex, a Ce-phosphoric acid complex, a Ce-bipyridine complex, or any mixture thereof.

The filter unit 4000 may be a mesh filter in which the antioxidant is processed into a wire form and arranged in a mesh shape without including a porous substrate. In this case, the antioxidant wire may be manufactured mainly from a metallic antioxidant, and if necessary, an organic antioxidant, an organometallic antioxidant, a HALS-based antioxidant, a sulfur-based antioxidant, or a phosphorus-based antioxidant may be further combined in addition to the metallic antioxidant.

The method of processing an antioxidant into a wire form may involve dispersing an antioxidant containing a metallic antioxidant as a main raw material in a solvent and then adding a wire-forming catalyst to form the antioxidant wire; however, the antioxidant wire may also be manufactured by a known method without being limited thereto.

The fabricated antioxidant wire may be arranged in a mesh pattern to produce a mesh-type filter. The thus-produced porous mesh-type filter may be applied to the filter unit 4000.

The filter unit 4000 described above is different in its use and working mechanism from the conventional filtration filter used in humidifiers. Conventionally, to prevent contamination of the humidifier, a filter for filtering contaminants was installed at the fluid inlet of the humidifier. The filtration filter physically filters by adjusting the pore size of the filter to filter out specific substances. In contrast, the filter unit 4000 according to an embodiment contains an antioxidant material, which reacts chemically with oxide substances such as peroxides or hydroxyl radicals to remove such oxide substances.

That is, the filter unit 4000 according to an embodiment chemically removes the desired substances through the filter, thereby distinguishing it from physical filtration membranes.

Therefore, the filter unit 4000 according to an embodiment must have a surface area above a certain range for the effective removal of oxide substances, and is not limited by the pore size required in physical filtration.

The filter unit 4000 according to an embodiment may have a specific surface area of 40 $cm^2/g$ or more and 200 $m^2/g$ or less, and the specific surface area was measured by determining the amount of nitrogen adsorbed using a BET (Brunauer, Emmett, Teller) analyzer.

If the specific surface area is less than 40 $cm^2/g$, oxide substances may pass through the filter unit 4000 without sufficient contact and reach the hollow fiber membrane. If it is 200 $m^2/g$ or more, not only is it difficult to form the filter, but even if it is formed, the durability of the filter is significantly reduced, making it difficult to apply to the filter unit.

For example, the specific surface area of the filter unit 4000 may be 40 $cm^2/g$ to 100 $m^2/g$, 40 $cm^2/g$ to 50 $m^2/g$, 40 $cm^2/g$ to 10 $m^2/g$, 40 $cm^2/g$ to 1 $m^2/g$, 40 $cm^2/g$ to 800 $cm^2/g$, 40 $cm^2/g$ to 600 $cm^2/g$, 40 $cm^2/g$ to 400 $cm^2/g$, 40 $cm^2/g$ to 200 $cm^2/g$, or 50 $cm^2/g$ to 150 $cm^2/g$, but is not limited thereto, and may have any range included within the aforementioned ranges.

According to an embodiment, the filter unit 4000 may have a pore size of 50 nm to 5000 $\mu$m. If the pore size is too small, the passage of moisture may be limited, and sufficient moisture exchange may be difficult in the membrane humidifier. If the pore size is too large, there is a high possibility that the oxide substances may pass through the filter unit without contacting the antioxidant. Therefore, appropriately adjusting the pore size and the surface area of the filter unit is effective for the removal of oxide substances.

Referring to FIG. 2, the fuel cell system according to another embodiment includes a fuel cell stack 1000, a hydrogen supply unit 2000, an air supply unit 3000, and a filter unit 4000.

The same configurations as described in FIG. 1 will be omitted from separate description, and only the differences will be described.

Referring to FIG. 2, the fuel cell system according to another embodiment has the filter unit 4000 disposed inside the humidifier 3200.

According to an embodiment, the humidifier may include a hollow fiber membrane arranged in fluid communication so that the outside air and the steam may exchange moisture, and the filter unit may be disposed between the hollow fiber membrane and the second inlet inside the humidifier.

For example, the filter unit 4000 may be arranged adjacent to the second inlet inside the humidifier 3200 to fundamentally block the entry of peroxides and hydroxyl radicals into the humidifier.

The filter unit 4000 disposed inside the humidifier 3200 may be a porous nonwoven filter in which an antioxidant is coated on a porous substrate, or a porous mesh filter formed of an antioxidant wire, as described earlier in connection with FIG. 1.

If the filter is a filter in which an antioxidant is coated on a porous substrate, the antioxidant may be arranged on both surfaces of the porous substrate, and the concentration of the antioxidant on the surface adjacent to the second inlet 112 may be higher than the concentration of the antioxidant on the surface adjacent to the hollow fiber membrane. With this structure, hydrogen peroxide and/or hydroxyl radicals contained in the steam entering the humidifier may be more effectively removed.

In addition, the porous nonwoven filter may be disposed inside the humidifier so as to wrap around the bundle of hollow fiber membranes. This effectively prevents deterioration due to oxide substances without reducing the moisture exchange capability of the hollow fiber membranes.

If the filter unit 4000 is a porous filter formed of antioxidant wire, the porous filter may be disposed inside the humidifier adjacent to the second inlet 112. In this case, the porous filter formed of antioxidant wire may be cut and arranged to correspond to the shape of the port of the inlet 112.

Although no separate drawing is provided, as described in FIG. 1, the filter unit 4000 may be disposed between the fuel cell stack 1000 and the humidifier 3200, and at the same time, as described in FIG. 2, the filter unit 4000 may be disposed inside the humidifier 3200, thereby doubly blocking the entry of hydrogen peroxide and hydroxyl radicals from the fuel cell stack 1000 into the humidifier 3200. As a result, the durability of the humidifier may be further improved.

FIGS. 3 and 4 are perspective views of a fuel cell humidifier 100 used in the fuel cell system according to an embodiment.

As shown in FIGS. 3 and 4, the fuel cell humidifier 100 of the present disclosure includes a middle case 110, a cap case 120, a fixing part 130, and a hollow fiber bundle 200.

A porous filter made of antioxidant wire or a nonwoven porous filter may be disposed on the inner surface of the middle case 110, and when such a filter is arranged, it may preemptively capture and remove oxide substances entering the humidifier.

The middle case 110 forms the external shape of the membrane humidifier 100 by coupling with the cap case 120. The middle case 110 and the cap case 120 may be made of a rigid plastic such as polycarbonate or metal. As shown in FIG. 3, the middle case 110 and the cap case 120 may have a circular cross-sectional shape in the width direction, or as shown in FIG. 4, may have a polygonal cross-sectional shape in the width direction. The polygon may be a rectangle, square, trapezoid, parallelogram, pentagon, hexagon, etc., and the polygon may have rounded corners. In addition, the circular shape may be an oval shape.

The middle case 110 is provided with a second fluid inlet 112 through which the second fluid is supplied, and a second fluid outlet 113 through which the second fluid is discharged.

The filter unit 4000 described above may be installed (not shown) at the second fluid inlet 112 and the second fluid outlet 113 through which the second fluid is discharged. In this case, oxide substances from the high temperature and humid air that is generated from the fuel cell stack and enters the second fluid inlet may be captured and removed.

In FIGS. 3 and 4, a plurality of hollow fiber membranes 210 are illustrated as being disposed in the middle case 110 in the form of a single hollow fiber bundle 200, but the hollow fiber membranes 210 may also be arranged inside the middle case 110 in a state where they are divided and contained in two or more cartridges.

The cartridges may be surrounded by a porous filter made of antioxidant wire or a nonwoven porous filter. Accordingly, contact between the hollow fiber bundle contained in the cartridge and the oxide substances may be prevented, and decomposition of the hollow fiber membrane may be effectively prevented.

A fluid inlet/outlet 121 is formed in the cap case 120. Of the cap cases 120 coupled to both ends of the middle case 110, the fluid inlet/outlet 121 formed in one of them becomes the first fluid inlet, and the fluid inlet/outlet 121 formed in the other becomes the first fluid outlet. The first fluid entering through the fluid inlet/outlet 121 functioning as a first fluid inlet passes through the internal passages of the hollow fiber membranes 210 (i.e., the lumens) accommodated in the middle case 110 and then exits through the fluid inlet/outlet 121 functioning as a first fluid outlet.

The ends of the hollow fiber membranes 210 are potted in the fixing part 130. The fixing part 130 binds the hollow fiber membranes 210 together and fills the gaps between the hollow fiber membranes 210 and the gaps between the hollow fiber membranes 210 and the middle case 110. As a result, both ends of the middle case 110 are blocked by the fixing part 130, and a flow path through which the second fluid passes is formed inside. The material of the fixing part 130 is known in the art and will not be described in detail herein.

The hollow fiber membranes 210 may be obtained by spinning and solidifying a spinning dope that is a mixture of a polymer, an additive, and a solvent.

The polymer may be appropriately selected from known polymers suitable for forming a hollow fiber membrane, and, for example, may include a polyvinylidene fluoride (PVDF)-based polymer, a polysulfone-based polymer, a sulfonated polysulfone, cellulose acetate, cellulose triacetate, polymethyl methacrylate, Nafion, a polystyrene (PS)-based polymer, a polytetrafluoroethylene (PTFE)-based polymer, a perfluorosulfonic acid (PFSA)-based polymer, a polyphenylsulfone-based polymer, a polyethersulfone (PES)-based polymer, a polyacrylonitrile (PAN)-based polymer, a polyetherimide (PEI)-based polymer, a polyimide (PI)-based polymer, or any combination of the aforementioned polymers.

For example, the polymer may include a polystyrene-based polymer.

The hollow fiber membrane may further include an additive such as a surfactant, a hydrophilic organic compound, or a hydrophilic polymer. Such an additive may be selected and added in an appropriate amount within a range that does not damage the inherent physical properties of the hollow fiber membrane. It would be apparent to one skilled in the art that other materials conventionally used in the manufacture of hollow fiber membranes may be used.

The hollow fiber membrane may have the antioxidant randomly or uniformly dispersed in the polymer.

For example, the hollow fiber membrane may achieve improved durability against peroxides and hydroxyl radicals without signifimaytly impairing the porosity of the hollow fiber membrane by having the antioxidant uniformly dispersed in the polymer.

The hollow fiber membrane may have a cavity inside and may include a plurality of pores communicating gas between the inner surface and the outer surface.

The hollow fiber membrane may have a concentration gradient of the antioxidant that increases from the inner surface toward the outer surface.

The solvent used in the spinning dope may include at least one of a first solvent, a second solvent, and a third solvent. For example, the solvent may be a mixed solvent including two solvents from the first solvent, the second solvent, and the third solvent.

The first solvent is a solvent that does not dissolve the polymer at room temperature (e.g., 23 °C to 25 °C) but may dissolve it at a high temperature (e.g., 80 °C or higher), and may include butanol, isobutanol, octanol, pentanol, isopentanol, dimethyl phthalate, diethyl phthalate, dibutyl phthalate, dioctyl phthalate, polyoxyethylene octylphenyl ether, or combinations thereof.

The second solvent is a solvent that does not dissolve the polymer, and may include water, methanol, ethanol, isopropanol, acetone, hexane, pentane, benzene, toluene, carbon tetrachloride, o-dichlorobenzene, polyethylene glycol, or combinations thereof.

The third solvent is a solvent that may dissolve the polymer even at room temperature, and may include N-methyl-2-pyrrolidone, dimethyl sulfoxide, dimethylacetamide, dimethylformamide, methyl ethyl ketone, tetrahydrofuran, tetramethylurea, or trimethyl phosphate.

Those skilled in the art may mix one or more solvents from the first solvent, the second solvent, and the third solvent, depending on the desired physical properties of the hollow fiber membrane and the characteristics of the polymer.

According to an embodiment, when the solvent is a mixed solvent of two or more solvents, the mixing ratio of the solvents may be 1:9 to 9:1 by weight, but is not limited thereto and may be appropriately selected within a range that those skilled in the art may determine, considering the content of the polymer and antioxidant, the viscosity of the spinning dope, and the physical properties of the final hollow fiber membrane.

Hereinafter, an embodiment of the present disclosure will be described through examples and comparative examples, and the scope of the present disclosure is not intended to be limited to the examples.

**(Example)**

**Example 1**

A filter coated with $CeO_2$ was installed at the top of the port connecting the humidifier and the stack, and installed between the humidifier and the stack. The filter used was prepared by spraying $CeO_2$ particles of 10 nm to 50 nm onto a nonwoven fabric with an average pore diameter of 200 $\mu$m and drying it. The thus-fabricated nonwoven fabric was installed in a housing to make the filter, which was then installed in the humidifier. The filter is mounted at a connection between a port through which high temperature and humid fluid flows out from a fuel cell stack and a port through which the fluid flows into the humidifier, and the shape of the filter has a circular shape corresponding to the cylindrical port shape. At this time, the specific surface area of the filter was about 60 cm$^2$/g.

**Example 2**

A filter produced as in Example 1 was wrapped around a bundle of hollow fiber membranes and placed inside a case, and potted to the case so that it could be mounted inside the humidifier.

**Example 3**

A filter was manufactured by spraying $CeO_2$ particles of 10 nm to 50 nm onto a nonwoven fabric with an average particle size of 100 $\mu$m and drying it. The filter produced in this way had a specific surface area of 120 cm$^2$/g, and a humidifier was produced by mounting it in the same manner as in Example 1.

**Comparative Example 1**

A humidifier was manufactured in the same manner as in Example 1, except that the filter was not installed.

**Evaluation Example 1: Filter Performance Evaluation**

In each of Examples 1 to 3 and Comparative Example 1, a 3 % $H_2O_2$ solution containing 1 ppm $FeSO_4$ was introduced at a rate of 10 cc per minute into the interior of the humidifier, and after 100 hours, the humidifier was disassembled to calculate the amount of decrease in the molecular weight of the humidifying film, which is presented in Table 1 below.

[Table 1]

|  | Molecular Weight Reduction Ratio |
| --- | --- |
| Example 1 | 8 % |
| Example 2 | 1 % |
| Example 3 | 4 % |
| Comparative Example 1 | 20 % |

Molecular Weight Reduction Ratio = [(Initial molecular weight of humidifying film - Molecular weight of humidifying film after immersion)/Initial molecular weight of humidifying film] $\times$ 100.

As shown in Table 1 above, it was confirmed that when a filter coated with $CeO_2$ was installed inside the humidifier, degradation and decomposition due to peroxides and hydroxyl radicals were prevented. Additionally, it may be confirmed that the larger the installed surface area, the greater the effect. Therefore, by applying such a filter, the humidifier membrane may be effectively protected from peroxides and hydroxyl radicals generated in the fuel cell stack.

**Claims**

1. A fuel cell system comprising:

   a fuel cell stack;
   a hydrogen supply unit for supplying hydrogen to the stack;
   an air supply unit for supplying air to the stack, the air supply unit including an air compressor and a humidifier; and
   a filter unit disposed between the air supply unit and the fuel cell stack,
   and configured to remove peroxides and/or hydroxyl radicals.

2. The fuel cell system of claim 1,
   wherein the air compression unit and the humidifier are arrranged to be in fluid communication with each other, and the humidifier is disposed downstream of the air compression unit such that a first fluid that has passed through the air compression unit is provided into the humidifier.

3. The fuel cell system of claim 1,
   wherein the humidifier includes:

   a first inlet into which a first fluid supplied from the air compression unit flows;
   a first outlet for delivering humidified air from the humidifier to the fuel cell stack; and
   a second inlet into which a second fluid from the fuel cell stack flows.

4. The fuel cell system of claim 3,
   wherein the filter unit is disposed between the fuel cell stack and the second inlet of the humidifier.

5. The fuel cell system of claim 1,
   wherein the filter unit comprises: a porous substrate; and an antioxidant provided on a surface of the porous substrate.

6. The fuel cell system of claim 5,
   wherein the porous substrate is a porous non-woven fabric.

7. The fuel cell system of claim 5,
   wherein the porous substrate has pores having an average pore size of 50 nm to 1000 $\mu$m.

8. The fuel cell system of claim 5,
   wherein the filter unit has a specific surface area in the range of 40 cm$^2$/g to 200 m$^2$/g.

9. The fuel cell system of claim 5,
   wherein the antioxidant is disposed on both surfaces of the porous substrate, and a concentration of the antioxidant on the surface adjacent to the fuel cell stack is higher than a concentration of the antioxidant on the surface adjacent to the air supply unit.

10. The fuel cell system of claim 5,
    wherein the antioxidant comprises an organic antioxidant, a metallic antioxidant, an organometallic antioxidant, a hindered amine light stabilizer (HALS)-based antioxidant, a sulfur-based antioxidant, a phosphorus-based antioxidant, or a combination thereof.

11. A fuel cell system comprising:

    a fuel cell stack;
    a hydrogen supply unit for supplying hydrogen to the stack;
    an air supply unit for supplying air to the stack, the air supply unit including an air compressor and a humidifier; and
    a filter unit disposed inside the humidifier and configured to remove
    peroxides and/or hydroxyl radicals.

12. The fuel cell system of claim 11,
wherein the air compression unit and the humidifier are arranged to be in fluid communication with each other, and the humidifier is disposed downstream of the air compression unit such that the first fluid that has passed through the air compression unit is provided into the humidifier.

13. The fuel cell system of claim 11,
wherein the humidifier includes:

a first inlet into which a first fluid from the air compression unit flows;
a first outlet for delivering humidified air from the humidifier to the fuel cell stack; and
a second inlet into which a second fluid from the fuel cell stack flows.

14. The fuel cell system of claim 11,

wherein the humidifier includes a hollow fiber membrane configured to be in fluid communication with the first fluid and the second fluid so as to enable moisture exchange therebetween, and
the filter unit is disposed between the hollow fiber membrane and the second inlet, within the humidifier.

15. The fuel cell system of claim 11,
wherein the filter unit includes: a porous substrate; and an antioxidant provided on a surface of the porous substrate.

16. The fuel cell system of claim 15,
wherein the porous substrate is a porous non-woven fabric.

17. The fuel cell system of claim 15,
wherein the porous substrate has pores having an average pore size of 50 nm to 1000 $\mu$m.

18. The fuel cell system of claim 14,
wherein the filter unit has a specific surface area in the range of 40 cm$^2$/g to 200 m$^2$/g.

19. The fuel cell system of claim 15,
wherein the antioxidant comprises an organic antioxidant, a metallic antioxidant, an organometallic antioxidant, a hindered amine light stabilizer (HALS)-based antioxidant, a sulfur-based antioxidant, a phosphorus-based antioxidant, or a combination thereof.

20. A fuel cell system comprising:

a fuel cell stack;
a hydrogen supply unit for supplying hydrogen to the stack;
an air supply unit for supplying air to the stack, wherein the air supply unit includes an air compressor and a humidifier;
a first filter unit disposed between the air supply unit and the fuel cell stack, and configured to remove peroxides and/or hydroxyl radicals; and
a second filter unit disposed inside the humidifier and configured to remove peroxides and/or hydroxyl radicals.

# FIG. 1

```
       ┌─2000                    ┌─1000
  ┌──────────────┐        ┌──────────────┐
  │   HYDROGEN   │───────▶│  FUEL CELL   │
  │ SUPPLY UNIT  │        │    STACK     │
  └──────────────┘        └──────────────┘
                                  │
                          ┌──────────────┐
                          │   FILTER     │    4000
                          │    UNIT      │──
                          └──────────────┘
                                  │
          ┌───────────────────────────────────────┐  3000
          │              AIR SUPPLY UNIT           │
          │  ┌──────────────┐   ┌──────────────┐   │
          │  │              │   │     AIR      │   │
          │  │  HUMIDIFIER  │   │ COMPRESSION  │   │
          │  │              │   │     UNIT     │   │
          │  └──────────────┘   └──────────────┘   │
          └───────────────────────────────────────┘
                   │                   │
                 3200                3100
```

# FIG. 2

```
       ┌─2000                    ┌─1000
  ┌──────────────┐        ┌──────────────┐
  │   HYDROGEN   │───────▶│  FUEL CELL   │
  │ SUPPLY UNIT  │        │    STACK     │
  └──────────────┘        └──────────────┘
                             │      │
          ┌───────────────────────────────────────┐  3000
          │              AIR SUPPLY UNIT           │
          │  ┌──────────────┐   ┌──────────────┐   │
    4000  │  │ FILTER UNIT  │   │     AIR      │   │
      ────│  │              │   │ COMPRESSION  │   │
          │  │  HUMIDIFIER  │   │     UNIT     │   │
          │  └──────────────┘   └──────────────┘   │
          └───────────────────────────────────────┘
                   │                   │
                 3200                3100
```

# FIG. 3

# FIG. 4

## INTERNATIONAL SEARCH REPORT

| International application No. |
|---|
| **PCT/KR2024/006405** |

### A. CLASSIFICATION OF SUBJECT MATTER

**H01M 8/04119**(2016.01)i; **H01M 8/04082**(2016.01)i

According to International Patent Classification (IPC) or to both national classification and IPC

### B. FIELDS SEARCHED

Minimum documentation searched (classification system followed by classification symbols)

H01M 8/04119(2016.01); H01M 8/04(2006.01); H01M 8/04007(2016.01); H01M 8/04089(2016.01); H01M 8/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 연료전지(fuel cell), 수소 공급 유닛(hydrogen supply unit), 공기 공급 유닛(air supply unit), 공기 압축부(air compressor), 가습기(humidifier), 필터(filter), 과산화물(peroxide), 라디칼(radical)

### C. DOCUMENTS CONSIDERED TO BE RELEVANT

| Category* | Citation of document, with indication, where appropriate, of the relevant passages | Relevant to claim No. |
|---|---|---|
| X | JP 2010-118250 A (TOYOTA MOTOR CORP.) 27 May 2010 (2010-05-27) See claim 1; paragraphs [0016]-[0018], [0020], [0038]-[0042], [0051] and [0054]; and figures 7 and 11. | 1-2,5-10 |
| Y | | 3-4,11-20 |
| Y | JP 2007-141647 A (TOYOTA CENTRAL RES & DEV LAB INC. et al.) 07 June 2007 (2007-06-07) See claim 1; paragraph [0025]; and figure 1. | 3-4,13-14,18 |
| Y | JP 2004-281268 A (TOYOTA CENTRAL RES & DEV LAB INC. et al.) 07 October 2004 (2004-10-07) See claims 6 and 9. | 11-20 |
| A | KR 10-2022-0116983 A (KOLON INDUSTRIES, INC.) 23 August 2022 (2022-08-23) See entire document. | 1-20 |
| A | KR 10-2022-0127539 A (KOLON INDUSTRIES, INC.) 20 September 2022 (2022-09-20) See entire document. | 1-20 |

☐ Further documents are listed in the continuation of Box C.  ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **14 August 2024** | **16 August 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/006405**

| Patent document cited in search report | | | Publication date (day/month/year) | Patent family member(s) | | | Publication date (day/month/year) |
|---|---|---|---|---|---|---|---|
| JP | 2010-118250 | A | 27 May 2010 | None | | | |
| JP | 2007-141647 | A | 07 June 2007 | JP | 5008860 | B2 | 22 August 2012 |
| JP | 2004-281268 | A | 07 October 2004 | None | | | |
| KR | 10-2022-0116983 | A | 23 August 2022 | CN | 116888778 | A | 13 October 2023 |
| | | | | EP | 4273974 | A1 | 08 November 2023 |
| | | | | JP | 2024-505476 | A | 06 February 2024 |
| | | | | US | 2024-0079619 | A1 | 07 March 2024 |
| | | | | WO | 2022-177188 | A1 | 25 August 2022 |
| KR | 10-2022-0127539 | A | 20 September 2022 | None | | | |

Form PCT/ISA/210 (patent family annex) (July 2022)